# EUROPÄISCHE PATENTSCHRIFT

(11) **EP 1 434 698 B1**
(45) Veröffentlichungstag und Bekanntmachung des Hinweises auf die Patenterteilung: **10.12.2008**
(21) Anmeldenummer: 02800579.1
(22) Anmeldetag: 27.09.2002
(51) Int. Cl.: B60C 23/04

(54) **SYSTEM ZUR ÜBERTRAGUNG VON REIFENZUSTANDSGRÖSSEN**
SYSTEM FOR TRANSMITTING TYRE CONDITION VARIABLES
SYSTEME POUR TRANSMETTRE DES GRANDEURS CONCERNANT L'ETAT DE PNEUMATIQUES

(30) Priorität: 04.10.2001 DE 10149172
(43) Veröffentlichungstag der Anmeldung: 07.07.2004
(73) Patentinhaber: Continental Teves AG & Co. oHG, 60488 Frankfurt (DE)
(72) Erfinder: FENNEL, Helmut, 65812 Bad Soden (DE); LOHBERG, Peter, 61381 Friedrichsdorf (DE)
(86) Internationale Anmeldenummer: PCT/EP2002/010856
(87) Internationale Veröffentlichungsnummer: WO 2003/031210

(56) Entgegenhaltungen:
- US-A- 5 190 247
- US-A- 5 231 391

## Beschreibung

Die Erfindung betrifft ein System zur Übertragung von Reifenzustandsgrößen gemäß Oberbegriff von Anspruch 1.

Es ist unter anderem aus der EP-A-0 806 307 bekannt, Reifenzustandsgrößen, wie Druck- oder Temperatur, in das Innere eines Kraftfahrzeuges, zum Beispiel an ein elektronisches Auswerte- oder Steuergerät, zu übertragen. Auch fahrdynamische Reifen- bzw. Radzustandsgrößen, wie Reifenquerkraft, Längskraft (Radmoment) oder Kräfte, die in radialer Richtung auf den Reifen wirken (Radaufstandskraft), können durch die in der EP-A-1 227 944 beschriebenen Anordnung gemessen werden. In beiden Fällen sollen die zu übertragenden Informationen vorrangig zur automatisierten Erhöhung der Fahrzeugsicherheit durch elektronisch gesteuerte Bremsreaktionen dienen. Es besteht darüber hinaus die Möglichkeit, für den Fahrer interessante Informationen, wie etwa den gemessenen Reifendruck, über separate Anzeigeeinheiten dem Fahrer zur Kenntnis zu bringen. Als Reifenzustandsgrößen werden hierbei unter anderem physikalische Zustände wie z.B. Innenluftdruck, Lufttemperatur, Temperatur des Reifengummis, Gummiverformungen, Geräuschspektren gesehen aber auch Kennzeichen oder Markierungen, wie Reifenkenndaten, aus denen Alter, Bauform, Typ (Sommer-/ Winterreifen) entnommen werden kann.

In der US 5,190,247 wird eine Drehvorrichtung für die Verwendung in Flugzeugfahrwerken beschrieben, bei der in der Achse eines Rades eine modulare, durchgehende Anordnung aus einem Stator und einem Rotor, der mittels Rollenlager in dem Stator gelagert ist, untergebracht ist. Dabei sind Stator und Rotor jeweils in zwei Abschnitte unterteilt, die einen Geschwindigkeitsgeber und eine elektromagnetische Kopplungseinrichtung vom Drehtransformatortyp für die vom Rad getragenen Sensoren bilden.

Ein Verfahren und eine Vorrichtung zur Überwachung eines Luftreifens wird in der EP 0 925 959 A2 offenbart. Dabei ist ein Reifenetikett mit Batterie an der Innenschicht des Reifens angebracht, welches gespeicherte Daten und einen Sensor enthält. Eine Transpondervorrichtung, die auf der Felge angeordnet ist, empfängt die gespeicherten oder gemessenen Daten von dem Reifenetikett und überträgt sie an einen entfernten Ort.

In einem Reifendruckkontrollsystem (TPMS) gemäß der EP-A-0 806 307 enthält jedes der vier Räder einen aktiven Sender, zum Teil darüber hinaus einen zusätzlichen Sender im Reserverad. Sind mehrere Empfangseinrichtungen (Antenne, Empfänger) vorhanden, kann nachteilhafterweise - übliche Sendefeldstärken vorausgesetzt - das empfangene Signal in jeder Empfangseinrichtung, ungünstigstenfalls sogar in einem Nachbarfahrzeug, empfangen werden, da von den Sendern in der Regel ein gleicher Trägerfrequenzbereich genutzt wird. Bei der Entwicklung einer Übertragungsvorrichtung für Reifenzustandsgrößen besteht bei Anwendung von Hochfrequenz-Verfahren nun das Problem, daß einerseits eine ausreichende Senderreichweite erzielt werden soll, andererseits gleichzeitig eine ausreichende Unterdrückung von Gleichkanalstörungen bzw. andere unerwünschte Verkopplungen zwischen mehreren Sendern und Empfangseinrichtungen zu vermeiden sind.

Die Erfindung setzt sich zum Ziel, diese Nachteile zu überwinden.

Diese Aufgabe wird gelöst durch ein System zur Übertragung von Reifenzustandsgrößen gemäß Anspruch 1.

Das erfindungsgemäße System umfasst eine Übertragungsvorrichtung, welche nachfolgend auch als "Nabenkoppler" bezeichnet wird, und welche zur Übertragung von Signalen über Reifenzustandsgrößen aus einem Rad an ein im Bereich der Fahrzeugkarosserie eines Kraftfahrzeugs angeordnetes elektronisches Auswerte- oder Steuergerät dient. Bei diesem Steuergerät handelt es sich bevorzugt um eine vorhandene elektronische Steuer-/Regeleinheit (ECU) für ein Kraftfahrzeugbremssystem (ABS, ESP, etc.).

Die übertragenen Reifenzustandsgrößen sind bevorzugt eine oder mehrere der Größen Luftdruck, Lufttemperatur, Reifentemperatur, Kennwerte des Reifentyps, Kennwerte des Reifenbetriebszustandes oder weitere für eine Fahrdynamikregelung interessante Radparameter, wie zum Beispiel Reifenquerkraft, Radmoment oder Reifenaufstandskraft.

Zur Übertragung dieser Kenngrößen werden sensorische Baugruppen mit Koppelbaugruppen und ggf. Energieübertragungsbaugruppen im erfindungsgemäßen System so kombiniert, daß die gewünschte sensorische Information im rotierbar gelagerten Rad gemessen und in den Bereich der Karosserie übertragen werden kann.

Ein grundsätzlicher Gedanke, welcher der Erfindung zu Grunde liegt, ist die Anwendung und technische Umsetzung von an sich bekannten allgemeinen telemetrischen Prinzipien auf das Problem der Übertragung von Zustandsgrößen aus dem Innenraum eines Kraftfahrzeugreifens heraus. Die zu übertragende Information muß durch den Reifengummi, insbesondere durch die Reifenseitenwand, hindurchgeleitet werden. Hierzu werden bevorzugt Sende-/ Empfangsantennen eingesetzt, die zueinander stets einen nennenswerten Ortsabstand von minimal einigen Zentimetern bis maximal in den Meterbereich hinein haben. In der Telemetrie lassen sich drei Klassen voneinander unterscheiden. In Anlehnung an früher übliche Bezeichnungen sind dies die sogenannte aktive Telemetrie, die halbaktive Telemetrie und die sogenannte passive Telemetrie. Bei der aktiven Telemetrie wird der Sender im Bereich der Sensorik beispielsweise durch eine eigene Batterie versorgt. Bei der halbaktiven Telemetrie wird der Sendestufe zum Beispiel auf transformatorischem Weg Wechselstromenergie zugeführt, diese dort gleichgerichtet und anstelle einer Batterie genutzt. Bei der passiven Telemetrie besteht der "Sender" zum Beispiel aus einem Resonanzkreis, der entweder durch Hochfrequenz-Pulspakete angeregt wird oder über eine lose Kopplung auf den Sendekreis zurückwirkt. Die über Sensoren gewonnene elektrische Abbildung der Zustandsgröße moduliert den Resonanzkreis in seiner Dämpfung bzw. Resonanzfrequenz. Dies wird auf der Anregungsseite detektiert.

Das erfindungsgemäße System umfasst weiterhin ein sensorisch ausgestattetes Fahrzeugrad umfassend eine Felge, einen Luftreifen und eine oder mehrere sensorische Baugruppen und/oder Energieübertragungsbaugruppen, welche mit dem Rad rotieren. In einer bevorzugten Ausführungsform bilden Reifen, Felge, die Meßeinrichtung und die Bauelemente zur Bildung einer elektrischen Verbindung mit dem Nabenkoppler einen festen unlösbaren Verbund, der als Einheit gefertigt und getauscht wird. Diese Einheit wird bei der Montage oder einem späteren Wechsel auf eine Nabe mit fabrikmäßig integriertem Nabenkoppler geschraubt. Zur weiteren Übertragung der Reifenzustandsgrößen an den Nabenkoppler ist vorzugsweise eine geeignete Steckverbindung am Rad und in entsprechender Weise am Nabenkoppler vorgesehen, so daß bei der Montage des Rades an der Nabe die notwendige elektrische Verbindung vorteilhafterweise automatisch hergestellt wird.

Erfindungsgemäß ist im Bereich des Reifenmantels, insbesondere an der Innenseite des Reifenmantels, eine sensorische Meßvorrichtung befestigt. Diese sensorische Meßvorrichtung ist entweder eine Einheit aus aktiven oder passiven elektronischen Bauelementen oder aber eine auf den Mantel aufgebrachte Meßmarkierung (Spiegel, Meßstreifen, Fadenkreuze, optisch anregbare Materialien etc.), die durch einen Abtaststrahl der auf der Felge angeordneten Signalübertragungsbaugruppe zum Ermitteln der gewünschten physikalischen Größe abgetastet wird.

Weitere bevorzugte Ausführungsformen der Erfindung ergeben sich aus den Unteransprüchen und der nachfolgenden Figurenbeschreibung, welche zur näheren Erläuterung der Erfindung dient.

Es zeigen
- Fig. 1: ein System zur Übertragung von Reifenzustandsgrö- ßen,
- Fig. 2: eine Prinzipdarstellung über die Anwendung von un- terschiedlichen Energieversorgungskonzepten,
- Fig. 3: eine Radeinheit im System gemäß Fig. 1 mit einer sensorischen Feldkopplung zwischen Reifenmantel und Felge,
- Fig. 4: eine Prinzipdarstellung mit verschiedenen Beispie- len für eine reifeninterne Feldkopplung,
- Fig. 5: einen Nabenkoppler mit Flachspulen,
- Fig. 6: einen Nabenkoppler mit Zylinderspulen,
- Fig. 7: verschiedene Kopplungsvarianten in einem Nabenkopp- ler und
- Fig. 8: einen Nabenkoppler mit integriertem Dynamo.

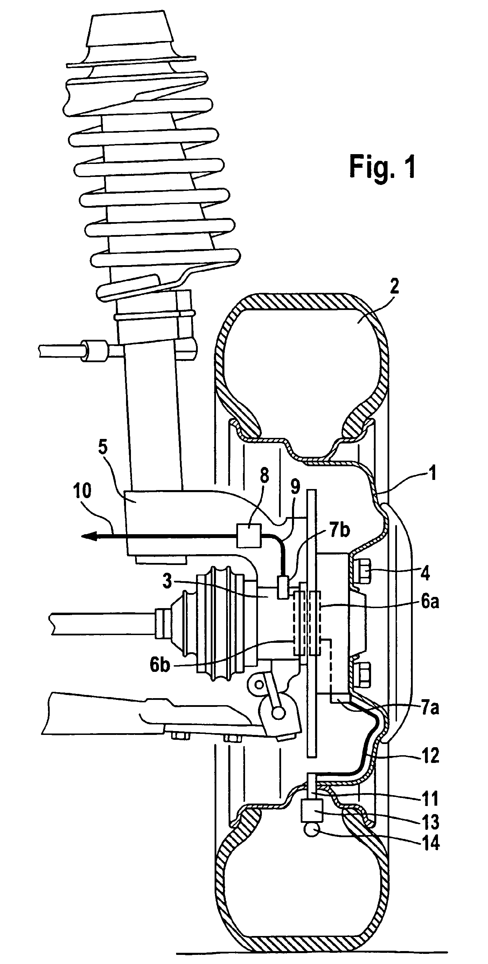

Fig. 1 stellt schematisch ein System zur Übertragung von Reifenzustandsgrößen dar, welches aus einer Radeinheit und einem mit dem Rad lösbar verbundenem Nabenkoppler besteht, welcher mit dem Chassis eines Kraftfahrzeug auf übliche Weise verbunden ist. Das Rad, bestehend aus Felge 1 und Luftreifen 2, ist an Nabe 3 mittels Schraube 4 befestigt. Nabe 3 enthält zumindest ein oder auch mehrere Lager und bildet die mechanische Schnittstelle zwischen dem rotierenden Rad und bezüglich des Rades ortsfesten Teilen 5, z.B. den Achsschenkeln des Fahrzeugchassis. Zur Übertragung der Reifenzustandsgrößen ist in Radnabe 3 Rotor 6a und ein nicht rotierender Stator 6b integriert. Im Nabenkoppler stehen sich die elektrisch wirksamen elektromechanischen Koppelelemente nur durch einen engen Luftspalt getrennt einander gegenüber, wobei eine Energie- und/oder Signalkopplung über elektrische Felder, vorrangig jedoch über magnetische, bzw. elektromagnetische Felder erfolgt. Der elektrische Zugang zum Nabenkoppler ist rotorseitig durch den Steckverbinder 7a und statorseitig durch Steckverbinder 7b realisiert, wobei die Steckdosen Bestandteil der Nabe sind. In der Nähe der Nabe, an ortsfesten Teilen 5, ist gemäß einer vorteilhaften Ausführungsform eine gehäuste elektronische Baugruppe 8 angeordnet, die elektronische Schaltkreise zur Signalaufbereitung und/oder Wechselstromspeisung des Nabenkopplers enthält und die über Steckerkabel 9 mit diesem verbunden ist. Zwischen Baugruppe 8 und elektronischem Steuergerät (ECU) besteht eine elektrische Verbindung 10. In der Felge existiert ein weiterer Steckverbinder 11, wobei dieser bevorzugt als Steckdose ausgeführt ist und insbesondere als Bestandteil der Felge eine Felgensteckdose bildet. In Felge 1 ist Steckerkabel 12 integriert, welcher Nabenkoppler und Felgensteckdose elektrisch miteinander verbindet. An der Innenseite der Felge, mit der Felgensteckdose mechanisch und/oder elektrisch verbunden, ist Baugruppe 13 angeordnet, die zur Energieversorgung einer Sensorik oder Meßvorrichtung 14 dient, welche eine oder mehrere spezifische Reifenzustandsgrößen erfaßt. In Baugruppe 13 kann die Bereitstellung der Betriebsenergie für den Meßvorgang als aktive oder halbaktive Energieversorgung erfolgen. Entsprechend der weiter oben beschriebenen Prinzipien bedeutet aktive Energieversorgung die Verwendung einer Batterie oder einer technischen Apparatur, die eine elektrische Energiegewinnung aus dem Umfeld ermöglicht. Erfindungsgemäß bevorzugt wird die Mechanik der Radbewegung bzw. deren Nebeneffekte genutzt, z.B. die Rotation der Felge oder deren Vibration aber auch Temperaturdifferenzen und Körperwärme (Seebeck Effekt) können genutzt werden. Auch der Einsatz von an sich bekannten miniaturisierten mechanischen Generatoren ist möglich. Es besteht als weitere bevorzugte Ausführungsform die Möglichkeit, zur Herstellung eines elektromechanischen Wandlers piezoelektrisches Folienmaterial einzusetzen. Wenn die Folienfläche in einer Wechselbewegung mechanisch vor und zurück gekrümmt wird, setzt diese elektrische Ladungen frei, wobei die Ladungsmenge durch Frequenz und Krümmungshub der Wechselbewegung und die Größe der Folienfläche veränderbar gestaltet werden kann. Durch elektronisches Gleichrichten und Glätten auf an sich bekannte Weise kann daraus eine Gleichspannung erzeugt werden, die während der Radrotation eine Batterie zu ersetzten vermag. Eine halbaktive Energieversorgung ist dann gegeben, wenn der Baugruppe 13 über den Nabenkoppler Wechselstrom zugeführt wird, aus dem dann, wie zuvor beschrieben, durch Gleichrichten und Glätten eine Gleichspannung zum Betrieb der Meßvorrichtung 14 erzeugt wird.

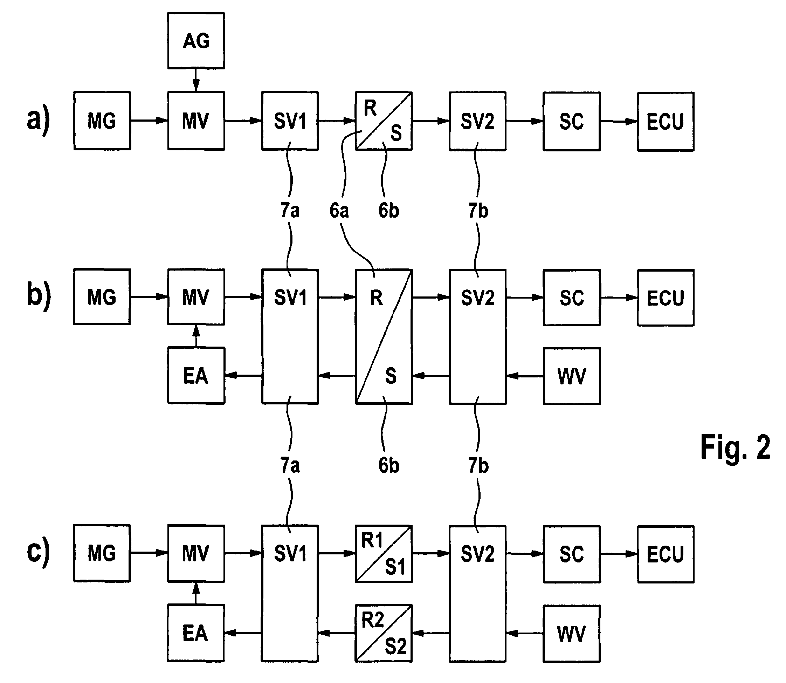

In der Prinzipdarstellung in Fig. 2 werden drei Ausführungsformen für beispielgemäße Anordnungen mit unterschiedlichem Energieversorgungskonzept schematisch dargestellt. Hierbei entspricht Fig. 2a) einer Anordnung mit aktiver Energieversorgung und Figuren 2b) und 2c) Anordnungsvarianten mit halbaktiver Energieversorgung.

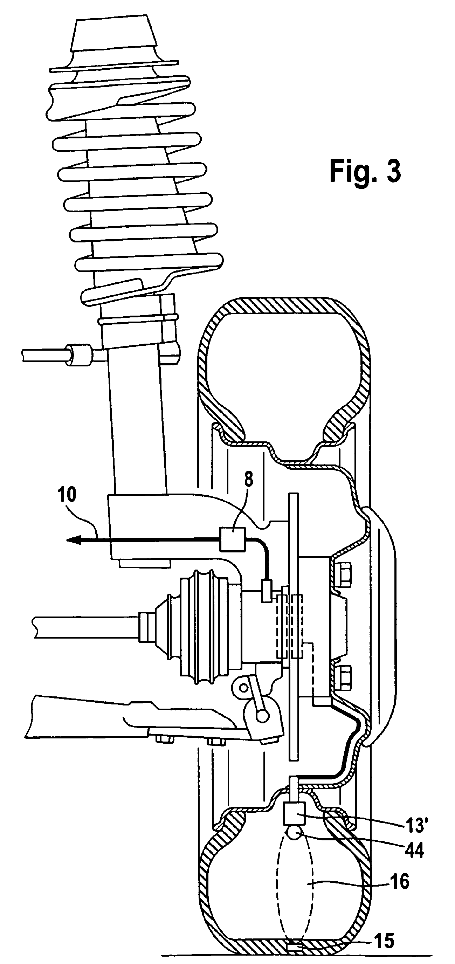

In Fig. 2a) wird unter Bezugnahme auf Fig. 1 die Meßgröße MG von der Meßvorrichtung MV (Bezugszeichen 14 in Fig. 1 bzw. 44 in Fig. 3) erfaßt. Die erforderliche Betriebsenergie wird durch aktive Gleichstromversorgung AG (Baugruppe 13 in Fig. 1) bereitgestellt. Diese kann wie o.a. eine Batterie oder ein spezieller Generator sein. Das Meßsignal gelangt über Steckverbindungen SV1 (11, 12, 7a) zu Nabenkoppler R/S (6a, 6b) und von dort über eine Steckverbindung SV2 (7b) zu einer Signalaufbereitungsstufe SC (elektronische Baugruppe 8 in Figuren 1 und 3) und über eine Leitung (Leitung 10 in Figuren 1 und 3) zu einem elektronischen Steuergerät ECU.

In Fig. 2b) wird der Nabenkoppler R/S in zweifacher Richtung genutzt, wobei das erfaßte Signal bis zum Steuergerät ECU den in Fig. 2a) dargestellten Pfad durchläuft. Zusätzlich zum ersten Kanal des Nabenkopplers ist ein zweiter Kanal vorgesehen, in dem die Energie den Nabenkoppler in entgegengesetzte Richtung durchläuft und welcher der halbaktiven Energieversorgung der Meßvorrichtung dient. Zu diesem Zweck ist in Baugruppe 8 von Fig. 1 neben der Aufbereitungsstufe zusätzlich eine Wechselstromversorgung WV angeordnet, die über die Steckverbindung SV2 (7b) mit Nabenkoppler R/S (6b, 6a) verbunden ist. Die Steckverbindung SV1 (7a, 12, 11) führt zu einer Energieaufbereitungsstufe EA in Baugruppe 13, in der dann, wie zuvor beschrieben, nach Gleichrichten und Glätten eine Gleichspannung zum Betrieb der Meßvorrichtung MV (14) bereitstellt wird.

Fig. 2c) zeigt eine Variante von Fig. 2b) mit dem Unterschied, daß der Nabenkoppler für jede Koppelrichtung einen separaten Koppelpfad R1/S1 und R2/S2 enthält. Ein Vorteil dieser Variante besteht darin, daß Signalpfad und Energiepfad mit stark unterschiedlichen Frequenzen betrieben werden können und sich die Koppler separat für diese Betriebsbedingungen optimieren lassen.

Fig. 3 stellt ein System dar, welches im Gegensatz zum System in Fig. 1 zur Messung der Reifenkenngröße eine Feldkopplung 16 nutzt, die zwischen einer sensorischen Meßvorrichtung 15, lokalisiert im Reifengummi selbst oder an der Innenseite des Reifens, und einer elektronischen Sende- und/oder Empfangseinrichtung 44, mit einer Energieversorgung 13' am Felgeninnenraum, angeordnet ist. Meßvorrichtung 15 kann beispielsweise eine sensorische Anordnung sein, welche zur Messung der sensorisch zu erfassenden Reifenzustandsgröße Energie benötigt. Die Anordnung in Fig. 3 nutzt den Vorteil, daß bei einer Rotation des Rades 15 gemeinsam mit Baugruppen 13' und 44 die Baugruppen gegenüber der Reifeninnenseite eine unveränderliche Position beibehalten, so daß eine Signalübertragung zur Energie- und/oder Informationsübertragung über die beschriebene Feldkopplung besonders einfach und mit minimalem Aufwand an Feldenergie vorgenommen werden kann.

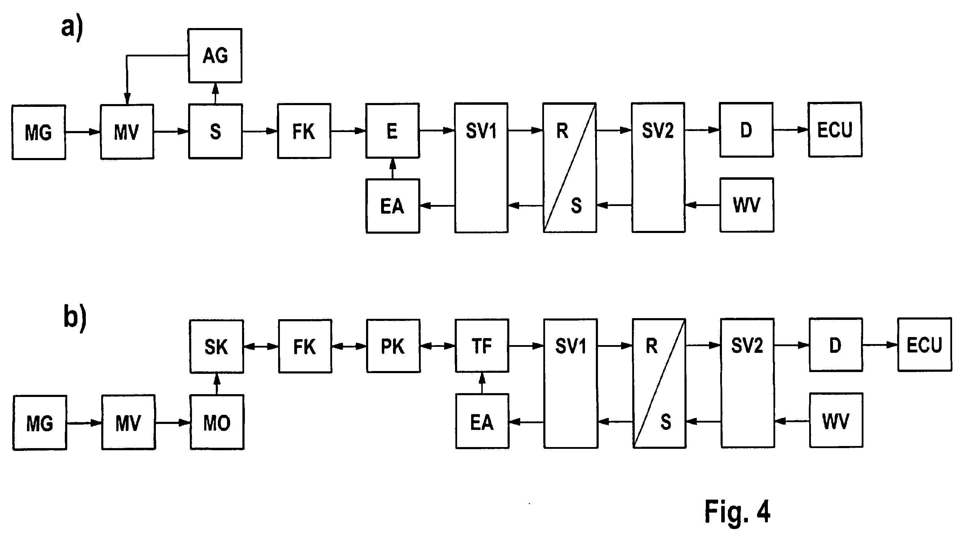

Fig. 4 zeigt unter Bezugnahme auf die Figuren 1 und 3 in schematischer Darstellung zwei Ausführungsbeispiele für Anordnungen mit unterschiedlichen Energieversorgungskonzepten.

Die Darstellung in Fig. 4a) entspricht einer Anordnung mit aktiver Energieversorgung 13', 44 für das Sendemodul in der Meßvorrichtung 15 entsprechend Fig. 3. Empfängermodul 44 weist in diesem Beispiel eine halbpassive Energieversorgung durch Baugruppe 13' auf. Meßgröße MG wird zunächst von Meßvorrichtung MV erfaßt. Anschließend wird Sender S entsprechend der Meßgröße moduliert. Die hierzu erforderliche Betriebsenergie wird durch eine aktive Gleichstromversorgung AG bereitgestellt. Diese kann wie o.a. eine Batterie sein oder ein spezieller Generator. Das Sendesignal gelangt über eine Feldkopplung FK zu Empfänger E, danach über Steckverbindungen SV zu Nabenkoppler R/S und von dort über eine weitere Steckverbindung SV zu Signalaufbereitungsstufe D und letztlich zu Steuergerät ECU. Nabenkoppler R/S wird gleichzeitig zur halbaktiven Energieversorgung des Empfängers E genutzt. Hierzu dient eine Energieaufbereitungsstufe EA, die in zuvor bereits beschriebener Weise mit einer Wechselstromversorgung WV zusammenwirkt.

In Fig. 4b) ist eine Anordnung dargestellt, bei der das Prinzip der passiven Telemetrie für den Meßwert und die Energieversorgung 13' sowie für das zugehörige Sende- /Empfängermodul 44 angewendet wird. Bezüglich der halbaktiven Energieversorgungsstruktur und der Signalübertragung über den Nabenkoppler zum Steuergerät ECU entspricht die hier beschriebene Anordnung im wesentlichen der Anordnung in Teilbild a), jedoch versorgt die Energieaufbereitungsstufe EA hier eine Sende-/Empfangseinrichtung TF, die trägerfrequent einen Primärkreis PK anregt, der seinerseits mit einem Sekundärkreis SK feldverkoppelt (Feldkopplung FK) ist, so daß eine Modulation MO dieses Sekundärkreises, verursacht durch ein Meßsignal MV, auf den Primärkreis PK zurückwirkt, was im Empfängerteil von TF detektiert werden kann und als detektiertes Signal an den Nabenkoppler weitergeleitet wird. Die Modulation kann insbesondere durch Dämpfungsänderungen und/oder Resonanzfrequenzverschiebungen des Sekundärkreises SK vorgenommen werden. Die erfindungsgemäß anwendbare Technik der Dämpfungsänderungen ist im Bereich von Hochfrequenz-Identifikationssystemen (RFID) an sich bekannt, z.B. beim elektronischen Lesen von Warenkennzeichen in der Produktion und im Handel. Die Technik der Resonanzfrequenzverschiebung läßt sich beispielsweise dadurch realisieren, daß der sensorische Wandler mechanisch als Kondensator ausgebildet ist, dessen Kapazität in Abhängigkeit von der Meßgröße variiert, wobei diese Kapazität Teil einer elektrischen Schwingkreiskapazität ist. Eine weitere Möglichkeit besteht in der elektrischen Ansteuerung von Varaktordioden durch das Meßsignal. Hierbei sind die Varaktordioden Teil eines elektrischen Schwingkreises. Eine weitere Möglichkeit ist die Anwendung von Resonatoren in an sich bekannter Oberflächenwellen-Technik (z.B. Quarz-OFW). Bei entsprechend diesem Prinzip arbeitenden Schaltungen bzw. Bauteilen kann über eine räumliche Distanz durch Senden eines Hochfrequenzsignals eine Wanderwelle auf der Oberfläche des Quarz angeregt werden, die nach einer kurzen Laufzeit ihrerseits einen Resonanzkreis zum Rücksenden einer Hochfrequenzschwingung anregt, deren Frequenzabweichung gegenüber der Frequenz des gesendeten Signals gemessen wird. Die Frequenzabweichung ist ein Maß für die mechanische Verformung der Quarzoberfläche. Die Meßwandler sind daher so konstruiert, daß die Meßgröße den Quarz verformt.

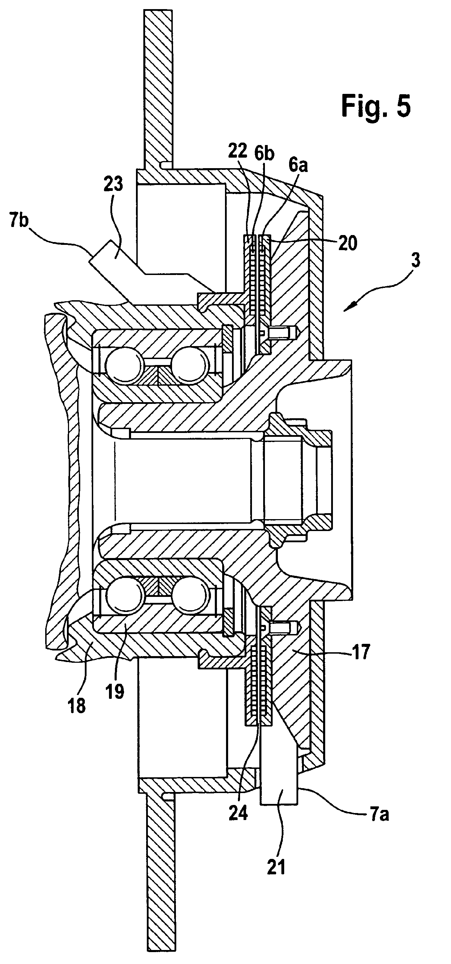

In Fig. 5 weisen Rotor 6a und Stator 6b der Übertragungsvorrichtung ("Nabenkoppler") jeweils Flachspulen auf (Rotorwicklung 20 und Statorwicklung 22). Rotor 6a ist mit dem über Kugellager 19 drehbar gelagerten Teil der Nabe 17 und Stator 6b mit dem feststehenden Teil der Nabe 18 ortsfest verbunden. Rotorwicklung 20 ist leitend mit Steckdose 21 (siehe 7a in Fig. 1) verbunden und Statorwicklung 22 führt elektrisch leitend auf Steckdose 23 (siehe Bezugszeichen 7b in Fig. 1). Zwischen Stator und Rotor existiert ein schmaler Luftspalt 24, vorteilhafterweise in der Größe zwischen etwa 0,5 mm bis etwa 2 mm. Die spiralartigen Wicklungen der Flachspulen stehen sich direkt gegenüber. Die Windungszahlen bzw. die Induktivitäten der Spulen lassen sich in Abhängigkeit von dem verwendeten Frequenzbereich und der zu übertragenden Leistung gemäß den in der Elektrotechnik allgemein bekannten Regeln anpassen. Dabei wird das Windungszahlverhältnis zur Impedanzanpassung etc. nach den bei Transformatoren üblichen Gesetzmäßigkeiten ausgewählt. Je nach der gewünschten übertragbaren Leistung und/oder den gewünschten Anforderung bezüglich einer Abschirmung können Stator- und Rotorkörper im Wicklungsbereich als Ferrit- oder Eisenblechhalbschalen oder Abschirmblechschalen ausgebildet sein, dergestalt, daß diese Schalen die Wicklungen gemeinsam nach Art eines Mantelkerns mit Luftspalt umfassen. Hierdurch wird ein Optimum zwischen Übertragungswirkungsgrad und Abschirmwirkung erreicht. Die Erfindung umfaßt weiterhin eine bevorzugte Ausführungsform zur Realisierung eines zweifachen Nabenkopplers gemäß Fig. 2c, bei der nur jeweils ein Stator- und Rotorkörper verwendet wird. Bei dieser Ausführungsform sind jeweils in Rotor und Stator jeweils zwei getrennte Wicklungen eingebracht. Dies hat den Vorteil, daß sowohl Wicklungen als auch Ferrit-, Eisen- oder Abschirmblechschalen für die beiden Übertragungsrichtungen getrennt gewählt werden können.

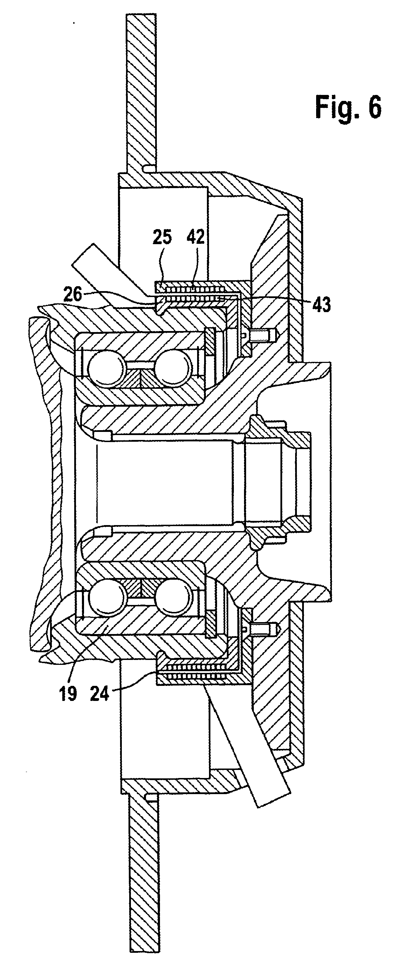

Fig. 6 zeigt ein weiteres Beispiel für einen Nabenkoppler, welcher im Gegensatz zu Fig. 5 Zylinderspulen 42, 43 für die Signalkopplung einsetzt, welche in Rotor 25 und Stator 26 eingelassen sind. Zylinderspulen 42 und 43 umfassen einander konzentrisch, abermals unter Bildung eines Luftspaltes 24. Die zuvor erläuterten Regeln für Windungszahlen, Ausführungen mit Ferrit- oder Eisen- oder Abschirmschalen gelten analog auch für den in Fig. 6 dargestellten Nabenkoppler.

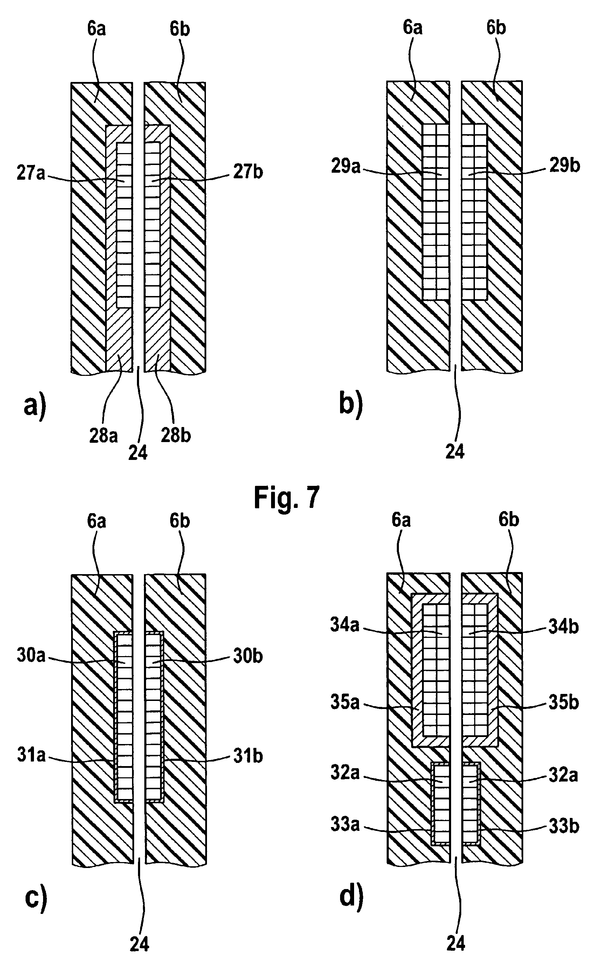

In Fig. 7 sind in den Teilbildern a) bis d) Beispiele für unterschiedliche Ausführungsformen von Stator/Rotor-Koppelwicklungen dargestellt, welche in den weiter oben beschriebenen Nabenkopplern einsetzbar sind. In allen dargestellten Beispielen bestehen die Grundkörper 6a, 6b von Rotor und Stator aus einem elektrisch und magnetisch nicht leitendem festen Kunststoff. Fig. 7a zeigt den Ausschnitt eines Nabenkopplers mit zwei einlagigen Wicklungen 27a, 27b, die in Schalen aus Ferrit 28a, 28b eingebettet sind. Das Ferritmaterial ist so gewählt, daß sich im zu übertragenden Frequenzbereich eine hohe Koppeleffektivität einstellt und gleichzeitig eine magnetische Schirmwirkung gegenüber dem Außenraum der Wicklungen erreicht wird. Fig. 7b zeigt den Ausschnitt eines Nabenkopplers mit zwei mehrlagigen Wicklungen 29a, 29b, die direkt in die zugehörigen Grundkörper eingebettet sind. Fig. 7c zeigt den Ausschnitt eines Nabenkopplers mit zwei einlagigen Wicklungen 30a, 30b, die in Abschirmblechschalen 31a, 31b eingebettet sind. Fig. 7d zeigt den Ausschnitt eines zweifachen Nabenkopplers mit zwei einlagigen Wicklungen 32a, 32b, die in Abschirmblechschalen 33a, 33b eingebettet sind. 34a und 34b bezeichnen zwei mehrlagige Wicklungen, die in Ferritschalen 35a, 35b eingebettet sind. Wicklungen 32a, 32b dienen hierbei zur Kopplung eines Signals mit höherer Frequenz vom Rotor zum Stator als die Wicklungen 34a, 34b, welche zur Übertragung von Wechselstromenergie niederer Frequenz herangezogen werden.

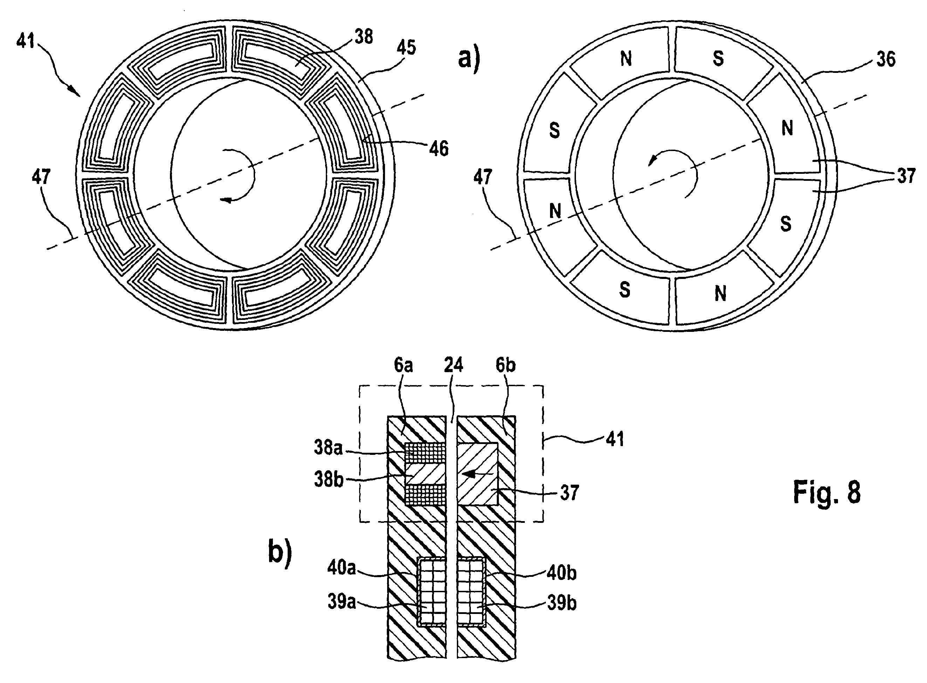

Fig. 8 zeigt eine erfindungsgemäße Ausführungsform, bei der in den Nabenkoppler zusätzlich ein Dynamo 41 zur Erzeugung einer Versorgungsspannung für den Schaltungsbetrieb der Baugruppen 13 und 14 bzw. 13' und 44 integriert ist. In Teilbild a) ist das Prinzip eines einfachen scheibenförmigen Wechselstromgenerators dargestellt, bestehend aus einem Ring 36, welcher umlaufend mit permanentmagnetischen Segmenten 37 in abwechselnder Polung (N = Nordpol; S = Südpol) versehen ist. Gegenüber von Ring 36 ist Ring 45 angeordnet, welcher aus mehreren, ebenfalls ringförmig angeordneten, Flachspulen 46 mit jeweils Eisenkernen 38 besteht. Wird zur Erzeugung von Energie nun Ring 45 gegenüber Ring 36 bewegt, insbesondere um eine gemeinsame Achse 47 gedreht, entsteht in den Spulen eine Induktionsspannung, die zur Bereitstellung von elektrischer Energie genutzt wird. Durch Serien- und/oder Parallelschaltung der verschiedenen im Ring vorhandenen Teilspulen 38 kann eine Leistungsanpassung an die Baugruppen 13, 14 bzw. 13', 44 vorgenommen werden. Fig. 8b) zeigt schematisch die Integration eines solchen Dynamos in einen Nabenkoppler. In Rotorseite 6a (Fig. 5) ist Spulenanordnung 38a mit Eisenkernen 38b eingebracht und in Statorseite 6b (Fig. 5) befindet sich Magnetanordnung 37. Unterhalb von Dynamo 41 ist die Signalübertragungsvorrichtung mit den Wicklungen 39a, 39b und Abschirmungen 40a, 40b angeordnet.

## Patentansprüche

1. System zur Übertragung von Reifenzustandsgrößen mit einer an einem Kraftfahrzeug montierten Übertragungsvorrichtung zur Übertragung von Signalen über Reifenzustandsgrößen aus einem Rad an ein im Bereich der Fahrzeugkarosserie angeordnetes elektronisches Auswerte- oder Steuergerät, welche lösbar mit einem Kraftfahrzeugrad zur Bildung eines elektromechanischen Verbunds befestigt ist,
wobei das Fahrzeugrad eine Felge (1), einen Luftreifen (2) und eine oder mehrere sensorische Baugruppen (13', 15, 44), welche mit dem Rad rotieren, umfasst und eine Signalverbindung (12) aufweist, die mit der Übertragungsvorrichtung eine elektrisch leitende und lösbare Verbindung bildet,
wobei die Reifenzustandsgrößen von einer oder mehreren sensorischen Baugruppen (15, 44) erfaßt werden können, welche in dem über Radnabe (3) rotierbar am Chassis montierten Rad angeordnet sind,
wobei in der Radnabe (3) eine Koppeleinrichtung integriert ist, welche zur Erzeugung einer ersten Feldkopplung aus einem Rotor (6a) und einem nicht rotierenden Stator (6b) besteht, und dessen eine oder mehrere Feldkoppelelemente (20, 22, 27a, 27b, 29a, 29b, 30a, 30b, 34a, 34b 39a, 39b, 42, 43) sich, durch einen engen Luftspalt (24) getrennt, einander gegenüberstehen, wobei eine Energie- und/oder Signalkopplung über elektrische Felder und/oder magnetische Felder, und/oder elektromagnetische Felder erfolgt,
**dadurch** gekenntzeichnet, daß
in dem Rad mindestens eine Energieversorgungs- und/oder Signalübertragungsbaugruppe (13', 44) mit einer im Bereich des Reifenmantels ortsfest verankerten sensorischen Meßvorrichtung (15) über eine zweite Feldkopplung (16) zur Signalübertragung und Energieversorgung der Meßvorrichtung zusammenwirkt, wobei die Energieübertragung insbesondere nach Art eines Transponders erfolgt.

2. System nach Anspruch 1, **dadurch gekennzeichnet, daß** der elektrische Zugang zur Übertragungsvorrichtung rotorseitig sowie statorseitig durch Steckverbinder (7a, 7b) realisiert ist.

3. System nach Anspruch 1 oder 2, **dadurch gekennzeichnet, daß** die Radnabe (3) eine integrierte elektromechanische Signal- und/oder Energie-Koppeleinrichtung (6a, 6b) umfaßt.

4. System nach mindestens einem der Ansprüche 1 bis 3, **dadurch gekennzeichnet, daß** eine kabelförmige elektrische Signalsteckverbindung (7a, 11, 12) von der Nabe zur Meßwerterfassungseinrichtung vorgesehen ist.

5. System nach mindestens einem der Ansprüche 1 bis 4, **dadurch gekennzeichnet, daß** eine Kabelsteckverbindung (7b, 9) vorhanden ist, die zur Verbindung mit einem gehäusten elektronischen Bauelement (8) und/oder einer Kabelverbindung (10) zu einer elektronischen Regeleinheit (ECU) ausgeführt ist.

6. System nach mindestens einem der Ansprüche 1 bis 5, **dadurch gekennzeichnet, daß** die Koppeleinrichtung Flachspulen, bestehend aus einem Rotor mit Rotorwicklung (20) und einem Stator mit Statorwicklung (22), umfaßt.

7. System nach mindestens einem der Ansprüche 1 bis 6, **dadurch gekennzeichnet, daß** die Koppeleinrichtung mit einander umfassenden Zylinderspulen, bestehend aus einem Rotor (25) mit integrierter Rotorwicklung und einem Stator (26) mit integrierter Statorwicklung, aufgebaut ist.

8. System nach mindestens einem der Ansprüche 1 bis 7, **dadurch gekennzeichnet, daß** Stator und/oder Rotor der Koppeleinrichtung mit Teilen eines oder mehrerer in die Nabe eingebauter Kugellager (19) mechanisch verbunden ist.

9. System nach mindestens einem der Ansprüche 1 bis 8, **dadurch gekennzeichnet, daß** die Grundkörper von Rotor und Stator aus einem elektrisch und magnetisch nicht leitenden Material bestehen.

10. System nach mindestens einem der Ansprüche 1 bis 9, **dadurch gekennzeichnet, daß** die Koppeleinrichtung mit zwei einlagigen Wicklungen (27a, 27b) ausgeführt ist, die in Ferritschalen (28a, 28b) eingebettet sind.

11. System nach mindestens einem der Ansprüche 1 bis 10, **dadurch** gekenntzeichnet, daß die Koppeleinrichtung mit mehrlagigen Wicklungen (29a, 29b), die direkt in die zugehörigen Grundkörper eingebettet sind, ausgeführt ist.

12. System nach mindestens einem der Ansprüche 1 bis 11, **dadurch gekennzeichnet, daß** die Koppeleinrichtung mit zwei Wicklungen (30a, 30b), die in Abschirmblechschalen (31a, 31b) eingebettet sind, ausgeführt ist.

13. System nach mindestens einem der Ansprüche 1 bis 12, **dadurch gekennzeichnet, daß** die Koppeleinrichtung mit zwei Wicklungen (32a, 32b), eingebettet in Abschirmblechschalen (33a, 33b), und zusätzlichen zwei Wicklungen (34a, 34b), eingebettet in Ferritschalen (35a, 35b), ausgeführt ist.

14. System nach mindestens einem der Ansprüche 1 bis 13, **dadurch gekennzeichnet, daß** in der Koppeleinrichtung zusätzlich ein Dynamo (41) zur Erzeugung einer Versorgungsspannung für den Betrieb der elektronischen Schaltung in der sensorischen Baugruppe integriert ist.

15. System nach Anspruch 14, **dadurch gekennzeichnet, daß** der Dynamo aus einem Ring permanentmagnetischer Segmente (37) auf der Statorseite und Spulenanordnungen (38a) mit Eisenkernen (38b) auf der Rotorseite aufgebaut ist.

16. System nach mindestens einem der Ansprüche 1 bis 15, **dadurch gekennzeichnet, daß** die sensorische Baugruppe eine oder mehrere Sensoren mit einem elektronischen Schaltkreis zur Aufbereitung des oder der Sensorsignale umfaßt.

17. System nach mindestens einem der Ansprüche 1 bis 16, **dadurch gekennzeichnet, daß** in den Reifen eine sensorische Baugruppe (15) integriert ist.

18. System nach mindestens einem der Ansprüche 1 bis 17, **dadurch gekennzeichnet, daß** die elektrische Verbindung zur Übertragungsvorrichtung einen Steckverbinder umfaßt.

19. System nach mindestens einem der Ansprüche 1 bis 18, **dadurch gekennzeichnet, daß** die zweite Feldkopplung (16) elektrisch, magnetisch oder elektromagnetisch erfolgt.

20. System nach mindestens einem der Ansprüche 1 bis 19, **dadurch gekennzeichnet, daß** die zweite Feldkopplung (16) optisch, akustisch oder über Wärmestrahlung erfolgt.

21. System nach mindestens einem der Ansprüche 1 bis 20, **dadurch gekennzeichnet, daß** die sensorische Meßvorrichtung (15) durch einen in die Meßvorrichtung integrierten Generator mit Gleichstromenergie versorgt wird.

22. System nach mindestens einem der Ansprüche 1 bis 21, **dadurch gekennzeichnet, daß** in die Felge ein Kabel integriert ist, das als Ausgang zur Koppeleinrichtung einen Stecker und auf der Reifenseite eine Felgensteckdose aufweist, die eine elektromechanische Steckverbindung zum Reifeninnenraum ermöglicht und in der die sensorische Baugruppe elektromechanisch ortsfest aufgesteckt und verankert werden kann.

23. System nach Anspruch 22, **dadurch gekennzeichnet, daß** die Felgensteckdose in den Felgenkörper ortsfest dergestalt integriert ist, daß sie luftdicht in den Reifenraum ragt.

24. System nach mindestens einem der Ansprüche 1 bis 23, **dadurch gekennzeichnet, daß** die sensorische Baugruppe mit sensorisch/elektronischen Mitteln elektrische Reifenzustandssignale erzeugt und diese über die Koppeleinrichtung zur gehäusten elektronischen Baugruppe und/oder elektronischen Regeleinheit (ECU) geleitet werden.

25. System nach mindestens einem der Ansprüche 1 bis 24, **dadurch gekennzeichnet, daß** die Reifenzustandsgrößen Luftdruck, Lufttemperatur und/oder Reifentemperatur umfassen.

26. System nach mindestens einem der Ansprüche 1 bis 25, **dadurch gekennzeichnet, daß** die Reifenzustandsgrößen Kennwerte des Reifentyps und/oder seines Betriebszustandes umfassen.

27. System nach mindestens einem der Ansprüche 1 bis 26, **dadurch gekennzeichnet, daß** das Rad ein Verbundrad aus Felge und Reifen ist, wobei der Reifen fest mit der Felge verbunden, insbesondere aufvulkanisiert ist.

28. System nach mindestens einem der Ansprüche 1 bis 27, **dadurch gekennzeichnet, daß** die sensorische Baugruppe von der gehäusten elektronischen Baugruppe und/oder elektronischen Regeleinheit (ECU) über die Koppeleinrichtung Wechselstromenergie zugeführt bekommt.

29. System nach mindestens einem der Ansprüche 1 bis 28, **dadurch gekennzeichnet, daß** die sensorische Baugruppe Wechselstromenergie zugeführt bekommt, die durch die Übertragungseinrichtung aus der Rotationsenergie des Rades gewonnen ist.

## Claims

1. System for transmitting tyre condition variables, having a transmission device which is mounted on a motor vehicle and has the purpose of transmitting signals relating to tyre condition variables from a wheel to an electronic evaluation or control unit which is arranged in the region of the bodywork of the vehicle and which is detachably attached to a motor vehicle wheel to form an electromechanical composite, wherein the vehicle wheel comprises a rim (1), a pneumatic tyre (2) and one or more sensor assemblies (13', 15, 44) which rotate with the wheel, and said vehicle wheel has a signal connection (12) which is connected in an electrically conductive and detachable fashion to the transmission device,
wherein the tyre condition variables can be acquired by one or more sensor assemblies (15, 44) which are arranged in the wheel which is mounted on the chassis so as to be rotatable by means of the wheel hub (3),
wherein a coupling device, which, in order to generate a first field coupling, is composed of a rotor (6a) and a non-rotating stator (6b), is integrated in the wheel hub (3), and the one or more field-coupling elements (20, 22, 27a, 27b, 29a, 29b, 30a, 30b, 34a, 34b, 39a, 39b, 42, 43) of said stator (6b) are located one opposite the other, separated by a narrow air gap (24), wherein a power coupling and/or signal coupling is formed by means of electrical fields and/or magnetic fields and/or electromagnetic fields, **characterized in that** in the wheel at least one power supply assembly and/or signal-transmitting assembly (13', 44) interacts with a sensor measuring device (15), which is anchored in a locationally fixed fashion in the region of the tyre casing, via a second field coupling (16) for transmitting signals and supplying power to the measuring device, wherein the power transmission is carried out in particular in the manner of a transponder.

2. System according to Claim 1, **characterized in that** the electrical access to the transmission device is implemented at the rotor or stator through plug-type connectors (7a, 7b).

3. System according to Claim 1 or 2, **characterized in that** the wheel hub (3) comprises an integrated electromechanical signal-coupling and/or power-coupling device (6a, 6b).

4. System according to at least one of Claims 1 to 3, **characterized in that** an electrical signal plug-type connection (7a, 11, 12) in the form of a cable is provided from the hub to the measured-value-registering device.

5. System according to at least one of Claims 1 to 4, **characterized in that** a cable plug-type connection (7b, 9) is provided which is designed to connect to an electronic component (8) with a housing and/or to a cable connection (10) to an electronic control unit (ECU).

6. System according to at least one of Claims 1 to 5, **characterized in that** the coupling device comprises flat coils composed of a rotor with a rotor winding (20) and a stator with a stator winding (22).

7. System according to at least one of Claims 1 to 6, **characterized in that** the coupling device is constructed with cylinder coils which enclose one another and are composed of a rotor (25) with integrated rotor winding and a stator (26) with integrated stator winding.

8. System according to at least one of Claims 1 to 7, **characterized in that** the stator and/or rotor of the coupling device are mechanically connected to parts of one or more ball bearings (19) which are built into the hub.

9. System according to at least one of Claims 1 to 8, **characterized in that** the base bodies of the rotor and stator are composed of a material which is electrically and magnetically non-conductive.

10. System according to at least one of Claims 1 to 9, **characterized in that** the coupling device is embodied with two single-layer windings (27a, 27b) which are embedded in ferrite shells (28a, 28b).

11. System according to at least one of Claims 1 to 10, **characterized in that** the coupling device is embodied with multi-layer windings (29a, 29b) which are embedded directly in the associated base bodies.

12. System according to at least one of Claims 1 to 11, **characterized in that** the coupling device is embodied with two windings (30a, 30b) which are embedded in sheet-metal screening shells (31a, 31b).

13. System according to at least one of Claims 1 to 12, **characterized in that** the coupling device is embodied with two windings (32a, 32b), embedded in sheet-metal screening shells (33a, 33b), and two additional windings (34a, 34b), embedded in ferrite shells (35a, 35b).

14. System according to at least one of Claims 1 to 13, **characterized in that** a dynamo (41) for generating a supply voltage for operating the electronic circuit in the sensor assembly is additionally integrated in the coupling device.

15. System according to Claim 14, **characterized in that** the dynamo is embodied from a ring of permanently magnetic segments (37), on the stator side and coil arrangements (38a) with iron cores (38b) on the rotor side.

16. System according to at least one of Claims 1 to 15, **characterized in that** the sensor assembly comprises one or more sensors with an electronic circuit for conditioning the sensor signal or signals.

17. System according to at least one of Claims 1 to 16, **characterized in that** a sensor assembly (15) is integrated into the tyre.

18. System according to at least one of Claims 1 to 17, **characterized in that** the electrical connection to the transmission device comprises a plug-type connector.

19. System according to at least one of Claims 1 to 18, **characterized in that** the second field coupling (16) is formed electrically, magnetically or electromagnetically.

20. System according to at least one of Claims 1 to 19, **characterized in that** the second field coupling (16) is formed optically, acoustically or by means of thermal radiation.

21. System according to at least one of Claims 1 to 20, **characterized in that** the sensor measuring device (15) is supplied with d.c. power by a generator which is integrated in the measuring device.

22. System according to at least one of Claims 1 to 21, **characterized in that** a cable, which has a plug as an output to the coupling device and a rim socket on the tyre side, is integrated in the rim, which rim socket permits an electromechanical plug-type connection to the interior of the tyre, and the sensor assembly can be plugged on and anchored, in an electromechanically locationally fixed fashion, in said rim socket.

23. System according to Claim 22, **characterized in that** the rim socket is integrated into the rim body in a locationally fixed fashion in such a way that it projects into the tyre space in an air-tight fashion.

24. System according to at least one of Claims 1 to 23, **characterized in that** the sensor assembly generates electrical tyre condition signals with sensor/electronic means, and said tyre condition signals are fed via the coupling device to the electronic assembly with a housing and/or electronic control unit (ECU).

25. System according to at least one of Claims 1 to 24, **characterized in that** the tyre condition variables comprise air pressure, air temperature and/or tyre temperature.

26. System according to at least one of Claims 1 to 25, **characterized in that** the tyre condition variables comprise characteristic values of the type of the tyre and/or of its operating state.

27. System according to at least one of Claims 1 to 26, **characterized in that** the wheel is a composite wheel composed of a rim and a tyre, wherein the tyre is permanently connected to the rim, in particular vulcanised onto it.

28. System according to at least one of Claims 1 to 27, **characterized in that** a.c. power is fed to the sensor assembly from the electronic assembly with a housing and/or electronic control unit (ECU) via the coupling device.

29. System according to at least one of Claims 1 to 28, **characterized in that** a.c. power which is acquired from the rotational energy of the wheel by means of the transmission device is fed to the sensor assembly.

## Revendications

1. Système pour transmettre des grandeurs concernant l'état de pneumatiques, comprenant un dispositif de transmission monté sur un véhicule automobile pour transmettre des signaux de grandeurs concernant l'état de pneumatiques depuis une roue à un appareil d'analyse ou de commande électronique disposé dans la région de la carrosserie du véhicule, lequel dispositif de transmission est fixé de manière amovible à une roue du véhicule automobile pour former un assemblage électromécanique,
la roue du véhicule comprenant une jante (1), un pneumatique (2) et un ou plusieurs modules de capteurs (13', 15, 44), qui tournent avec la roue, et présente une connexion par signaux (12) qui forme, avec le dispositif de transmission, une connexion électriquement conductrice et amovible, les grandeurs concernant l'état de pneumatiques pouvant être détectées par un ou plusieurs modules de capteurs (15, 44), qui sont disposés dans la roue montée sur le châssis de manière à pouvoir tourner sur le moyeu de roue (3),
un dispositif d'accouplement étant intégré dans le moyeu de roue (3), lequel se compose d'un rotor (6a) et d'un stator (6b) non rotatif, pour produire un premier couplage de champ, et dont un ou plusieurs éléments de couplage de champ (20, 22, 27a, 27b, 29a, 29b, 30a, 30b, 34a, 34b, 39a, 39b, 42, 43) sont en regard les uns des autres tout en étant séparés par un mince entrefer (24), ce qui produit un couplage énergétique et/ou signalétique par le biais de champs électriques et/ou de champs magnétiques et/ou de champs électromagnétiques,
**caractérisé en ce que**
dans la roue, au moins un module d'alimentation en énergie et/ou de transmission de signaux (13', 44) coopère avec un dispositif de mesure (15) par capteurs amarré fixement dans la région de l'enveloppe du pneumatique par le biais d'un deuxième couplage de champ (16) pour la transmission de signaux et l'alimentation en énergie du dispositif de mesure, la transmission d'énergie s'effectuant notamment à la manière d'un transpondeur.

2. Système selon la revendication 1, **caractérisé en ce que** l'accès électrique au dispositif de transmission est réalisé du côté du rotor ainsi que du côté du stator par des connecteurs enfichables (7a, 7b).

3. Système selon la revendication 1 ou 2, **caractérisé en ce que** le moyeu de roue (3) comprend un dispositif de couplage énergétique et/ou signalétique électromécanique intégré (6a, 6b).

4. Système selon au moins l'une quelconque des revendications 1 à 3, **caractérisé en ce qu'**il est prévu une connexion enfichable électrique pour signaux en forme de câble (7a, 11, 12) allant du moyeu au dispositif de détection des grandeurs de mesure.

5. Système selon au moins l'une quelconque des revendications 1 à 4, **caractérisé en ce que** l'on prévoit une connexion enfichable par câble (7b, 9) qui est réalisée pour permettre la connexion à un composant électronique (8) intégré dans un boîtier et/ou à une connexion par câble (10) à une unité électronique de réglage (ECU).

6. Système selon au moins l'une quelconque des revendications 1 à 5, **caractérisé en ce que** le dispositif de couplage comprend des bobines plates, constituées d'un rotor avec un enroulement rotorique (20) et d'un stator avec un enroulement statorique (22).

7. Système selon au moins l'une quelconque des revendications 1 à 6, **caractérisé en ce que** le dispositif de couplage est construit avec des bobines cylindriques comprises les unes dans les autres, constituées d'un rotor (25) avec un enroulement rotorique intégré et d'un stator (26) avec un enroulement statorique intégré.

8. Système selon au moins l'une quelconque des revendications 1 à 7, **caractérisé en ce que** le stator et/ou le rotor du dispositif de couplage est connecté mécaniquement à des pièces d'un ou de plusieurs roulements à billes (19) intégrés dans le moyeu.

9. Système selon au moins l'une quelconque des revendications 1 à 8, **caractérisé en ce que** les corps de base du rotor et du stator se composent d'un matériau non conducteur électriquement et magnétiquement.

10. Système selon au moins l'une quelconque des revendications 1 à 9, **caractérisé en ce que** le dispositif de couplage est réalisé avec deux enroulements monocouche (27a, 27b), qui sont noyés dans des coques de ferrite (28a, 28b).

11. Système selon au moins l'une quelconque des revendications 1 à 10, **caractérisé en ce que** le dispositif de couplage est réalisé avec des enroulements multicouches (29a, 29b) qui sont directement noyés dans les corps de base associés.

12. Système selon au moins l'une quelconque des revendications 1 à 11, **caractérisé en ce que** le dispositif de couplage est réalisé avec deux enroulements (30a, 30b) qui sont noyés dans des coques en tôle de blindage (31a, 31b).

13. Système selon au moins l'une quelconque des revendications 1 à 12, **caractérisé en ce que** le dispositif de couplage est réalisé avec deux enroulements (32a, 32b), noyés dans des coques en tôle de blindage (33a, 33b), et avec en outre deux enroulements (34a, 34b), noyés dans des coques de ferrite (35a, 35b).

14. Système selon au moins l'une quelconque des revendications 1 à 13, **caractérisé en ce que** dans le dispositif de couplage est en outre intégrée une dynamo (41) pour produire une tension d'alimentation pour le fonctionnement du circuit électronique dans le module de capteurs.

15. Système selon la revendication 14, **caractérisé en ce que** la dynamo se compose d'une bague de segments à aimantation permanente (37) du côté du stator et d'agencements de bobines (38a) avec des noyaux de fer (38b) du côté du rotor.

16. Système selon au moins l'une quelconque des revendications 1 à 15, **caractérisé en ce que** le module de capteurs comprend un ou plusieurs capteurs avec un circuit électronique pour fournir le ou les signaux de capteurs.

17. Système selon au moins l'une quelconque des revendications 1 à 16, **caractérisé en ce qu'**un module de capteurs (15) est intégré dans les pneumatiques.

18. Système selon au moins l'une quelconque des revendications 1 à 17, **caractérisé en ce que** la connexion électrique au dispositif de transmission comprend un connecteur enfichable.

19. Système selon au moins l'une quelconque des revendications 1 à 18, **caractérisé en ce que** le deuxième couplage de champ (16) s'effectue de manière électrique, magnétique ou électromagnétique.

20. Système selon au moins l'une quelconque des revendications 1 à 19, **caractérisé en ce que** le deuxième couplage de champ (16) s'effectue sous forme optique, acoustique ou par le biais d'un rayonnement thermique.

21. Système selon au moins l'une quelconque des revendications 1 à 20, **caractérisé en ce que** le dispositif de mesure (15) par capteurs est alimenté en courant continu par un générateur intégré dans le dispositif de mesure.

22. Système selon au moins l'une quelconque des revendications 1 à 21, **caractérisé en ce qu'**un câble est intégré dans la jante, lequel présente, en tant que sortie vers le dispositif de couplage, une fiche mâle et du côté du pneumatique, une prise femelle de jante, qui permet une connexion par enfichage électromécanique avec l'espace interne du pneumatique et dans laquelle le module de capteurs peut être enfoncé fixement et ancré de manière électromécanique.

23. Système selon la revendication 22, **caractérisé en ce que** la prise femelle de jante est intégrée fixement dans le corps de la jante, de telle sorte qu'elle pénètre hermétiquement dans la chambre du pneumatique.

24. Système selon au moins l'une quelconque des revendications 1 à 23, **caractérisé en ce que** le module de capteurs produit des signaux électriques d'état du pneumatique avec des moyens de capteurs ou des moyens électroniques, et les conduit par le biais du dispositif de couplage au module électronique intégré dans un boîtier et/ou à l'unité de réglage électronique (ECU).

25. Système selon au moins l'une quelconque des revendications 1 à 24, **caractérisé en ce que** les grandeurs concernant l'état de pneumatiques incluent la pression d'air, la température de l'air et/ou la température du pneumatique.

26. Système selon au moins l'une quelconque des revendications 1 à 25, **caractérisé en ce que** les grandeurs concernant l'état de pneumatiques incluent des valeurs caractéristiques du type de pneumatique et/ou de son état de fonctionnement.

27. Système selon au moins l'une quelconque des revendications 1 à 26, **caractérisé en ce que** la roue est une roue composite constituée de la jante et du pneumatique, le pneumatique étant connecté fixement à la jante, notamment par vulcanisation.

28. Système selon au moins l'une quelconque des revendications 1 à 27, **caractérisé en ce que** le module de capteurs reçoit du courant alternatif du module électronique intégré dans un boîtier et/ou de l'unité de réglage électronique (ECU), acheminé par le biais du dispositif de couplage.

29. Système selon au moins l'une quelconque des revendications 1 à 28, **caractérisé en ce que** le module de capteurs reçoit du courant alternatif acheminé, qui est obtenu par le biais du dispositif de transmission à partir de l'énergie de rotation de la roue.
